# FASCICULE DE BREVET EUROPEEN

(11) **EP 2 472 970 B1**
(45) Date de publication et mention de la délivrance du brevet: **13.11.2013**
(21) Numéro de dépôt: 11194901.2
(22) Date de dépôt: 21.12.2011
(51) Int. Cl.: H04W 64/00

(54) **Procédé et système de géolocalisation d'un équipement appartenant à un réseau, par exemple un boîtier femto**
Verfahren und System zur Geolokalisierung eines Netzwerkgerätes, zum Beispiel ein Femto-Gehäuse
Method and system for geolocating a network equipment, for example a femto housing

(30) Priorité: 29.12.2010 FR 1061336
(43) Date de publication de la demande: 04.07.2012
(73) Titulaire: Société Française du Radiotéléphone-SFR, 75008 Paris (FR)
(72) Inventeur: Fattouch, Imad, 75013 PARIS (FR); Laune, Marthe, 78000 VERSAILLES (FR)
(74) Mandataire: Marconnet, Sébastien

(56) Documents cités:
- EP-A1- 2 252 114
- US-A1- 2007 002 813
- US-A1- 2008 299 992
- US-A1- 2008 318 596
- US-A1- 2010 120 394
- US-B1- 7 577 443

## Description

**DOMAINE TECHNIQUE DE L'INVENTION**

L'invention concerne un procédé et un système de géolocalisation d'un équipement appartenant à un réseau. L'invention trouve une application particulièrement avantageuse dans le domaine des télécommunications pour la localisation précise des boîtiers de type femto. On rappelle que « femto » veut dire femtocell et correspond à la définition d'une Home NodeB selon le standard 3GPP.

**ETAT DE LA TECHNIQUE**

Un réseau PLMN (Public Land Mobile Network) par exemple de type GSM (Global System for Mobile communication) ou UMTS (Universal Mobile Telecommunication System) appelé aussi réseau mobile comprend des stations de base assurant la gestion des télécommunications avec les téléphones mobiles des abonnés. Les stations de base sont associées à des macrocellules ayant une portée de l'ordre de 10 à 30km, des microcellules ayant une portée d'environ 500m et des picocellules ayant une portée de l'ordre de 100m.

Par ailleurs, on connaît des cellules de type femto ayant une portée réduite. Une femtocellule est associée à un boîtier installé chez un abonné relié au réseau coeur de l'opérateur (« core network » en anglais) à travers tout type de connectivité IP, notamment l'accès Internet classique via ADSL dans les foyers ou les petites entreprises. Les boîtiers femto donnent accès aux services mobiles de l'opérateur via un téléphone mobile standard, ce téléphone pouvant communiquer avec le réseau mobile sur une couverture assez restreinte qui a la particularité d'être réduite à une zone d'accès résidentielle ou d'entreprise.

L'usage d'un boîtier femto peut être restreint aux seuls membres du foyer ou de l'entreprise autorisés. On parle alors de mode dit « fermé » décrit dans le document W02008/047041 auquel on se réfèrera pour plus de détails.

L'usage du boîtier femto peut également être restreint à une communauté d'abonnés à un service spécifique consistant à mettre à disposition la couverture des boîtiers femto à toute personne de la communauté. On parle alors de mode dit « ouvert ». Bien entendu les deux modes d'accès « ouvert » et « fermé » peuvent cohabiter.

L'installation du boîtier femto étant réalisée directement par l'utilisateur, l'opérateur ne peut pas connaître le lieu exact de son installation, en particulier dans le cas où le boîtier femto n'est pas lié à un modem. De plus, la connectivité du boîtier femto étant une connectivité de type IP, le boîtier femto peut être installé derrière tout type de connexion IP partout en France (et dans le monde).

Toutefois, il est important de pouvoir déterminer l'emplacement d'un boîtier femto afin de pouvoir notamment:
- contrôler et éventuellement empêcher le déplacement du boîtier femto dans le cas où l'abonné emmène le boîtier femto partout avec lui,
- acheminer des appels d'urgence,
- intercepter et localiser en temps réels des appels sur le boîtier femto (problématique de sécurité),
- modifier des paramètres du boîtier femto comme par exemple la fréquence d'émission utilisée, la puissance, ou tout autre paramètre du boîtier, ce en fonction de sa localisation,
- pouvoir remonter les informations de localisation précise aux autorités compétentes (sécurité, etc.).

L'invention permet de répondre à ce besoin.

On connaît dans l'état de la technique la demande de brevet américain N° US 2010/120394 qui décrit un procédé de communication mettant en oeuvre des cellules de type « *femto-cells »* en utilisant des méthodes de proxy dans lesquelles la position d'un terminal mobile, utilisant une "femto-cell" ou ayant une "femto-cell" comme candidat de transfer (Handover), permet de déterminer la position de la dite "femto-cell".

On connaît également dans l'état de la technique le brevet américain N° US 7 577 443 qui décrit un procédé de communication dans le domaine des télécommunications mobiles, mettant en oeuvre des stations de base Internet à coût réduit, procédé dans lequel la position d'un terminal mobile, associé à une station de base, est utilisé pour déterminer la position de la dite station de base.

### OBJET DE L'INVENTION

A cet effet, l'invention propose de déporter la fonction de localisation en la faisant réaliser par le terminal mobile associé au boîtier femto. Plus précisément, une application étant installée sur le terminal, on établit une communication entre le terminal et un serveur de configuration lorsque le terminal est sous couverture femto, ce serveur de localisation répertoriant des identifiants des boîtiers femto et des identifiants de terminaux associés. Puis le terminal effectue une mesure de position soit à l'aide d'une fonctionnalité GPS activée par l'application, soit à l'aide des identifiants radio captés par le terminal. La mesure de position est alors transmise au serveur soit via le boîtier femto, soit via le réseau radio environnant 2G/3G avec lequel le terminal est en relation.

Selon un perfectionnement de l'invention, la détection pourra être complétée par la mise en oeuvre d'un ou plusieurs mécanismes radio de détection de l'environnement radio par le boîtier femto et/ou le terminal ainsi que par l'acquisition d'une information relative à la position du terminal (la « LAC » Location Area Code) insérée dans un message de demande de mise à jour de position (message « LU » de Localisation Update) émis vers le réseau coeur. Les résultats des différents mécanismes sont combinés selon une méthode statistique pour déterminer la position la plus vraisemblable du boîtier femto.

L'invention va ainsi permettre de :
- fournir, à travers le serveur de configuration, des informations de localisation aux opérateurs ainsi qu'aux différents organismes ayant besoin de ces informations (état, sécurité, santé, etc.),
- acheminer les appels d'urgence jusqu'au boîtier femto ainsi localisé,
- intercepter et localiser en temps réel des appels passés via le boîtier femto afin de gérer des problématiques de sécurité,
- modifier des paramètres du boîtier femto (fréquence utilisée, puissance, paramétrage de la femto, etc.) en fonction de sa position géographique,
- inhiber le fonctionnement du boîtier femto ou non en fonction de sa position géographique,
- restreindre les services (voix, data, SMS, « visio », certains numéros surtaxés, etc.) en fonction de la position géographique du boîtier femto,
- se passer d'un récepteur GPS ou radio dans le boîtier femto pour identifier la localisation de ce boîtier.

La mise en oeuvre de l'invention concerne la localisation d'un boîtier de type femto mais pourrait être exploitée avec tout type d'équipement apte à établir une liaison avec un réseau informatique et/ou avec un terminal mobile. Dans certains cas bien sûr, si l'équipement ne dispose pas des fonctionnalités pour le faire, certains mécanismes radio de détection de l'environnement ne seront pas mis en oeuvre.

L'invention concerne donc un procédé selon la revendication 1. Les modes de réalisation préférés sont définis dans les revendications dépendantes.

L'invention concerne en outre un système selon la revendication 11.

**BREVE DESCRIPTION DES FIGURES**

L'invention sera mieux comprise à la lecture de la description qui suit et à l'examen des figures qui l'accompagnent. Ces figures ne sont données qu'à titre illustratif mais nullement limitatif de l'invention. Elles montrent :

Figure 1 : une représentation schématique d'un réseau de téléphonie mobile mettant en oeuvre le procédé selon l'invention ;

Figure 2 : un diagramme des différentes étapes du procédé selon l'invention ;

Figure 3 : une représentation schématique de la combinaison de plusieurs méthodes mises en oeuvre pour déterminer la localisation d'un boîtier femto selon un perfectionnement de l'invention ;

Les éléments identiques, similaires ou analogues conservent la même référence d'une figure à l'autre.

**DESCRIPTION D'UN MODE DE REALISATION PREFERENTIEL DE L'INVENTION**

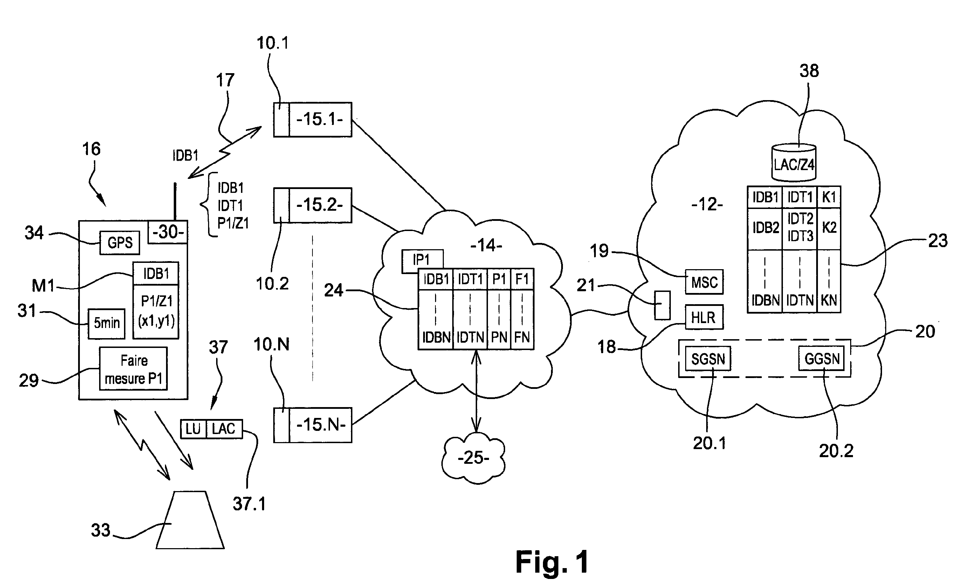

La Figure 1 montre une pluralité de boîtiers femto 10.1-11.N ou femto cellules reliés à un réseau coeur 12 d'un opérateur de téléphonie mobile par l'intermédiaire d'un réseau 14 de type IP, par exemple le réseau Internet. A cet effet, les boîtiers femto 10.1-10.N sont de préférence intégrés à un module modem/routeur 15.1-15.N connecté au réseau Internet 14 par exemple via une ligne téléphonique.

Un terminal 16 mobile pouvant prendre la forme d'un téléphone mobile, d'un ordinateur, d'un PDA, ou tout autre appareil adapté est en relation avec un boîtier femto 10.1 via une interface radio 17.

On note que le réseau coeur 12 permet aux abonnés de communiquer à l'intérieur et à l'extérieur du réseau en fournissant les moyens d'interconnexion avec d'autres réseaux fixes ou mobiles. Le réseau coeur 12 comporte notamment de manière connue un module 18 HLR (« Home Location Register ») contenant des informations relatives aux conditions d'abonnement et aux caractéristiques des services souscrits ainsi des informations générales sur la localisation de l'utilisateur procurées par la donnée « LAC » (Location Area Code) remontée par le terminal. Un module 19 MSC (« Mobile Switching Center » en anglais) assure l'interface avec le terminal 16 accédant aux services de commutation de circuits du réseau.

Le réseau coeur 12 comporte également un module coeur paquet 20 composé d'un module 20.1 SGSN (« Serving GPRS Support Node » en anglais) et d'un module 20.2 GGSN (« Gateway GPRS Support Node » en anglais) assurant l'interface standard d'un terminal mobile accédant aux services de type paquets.

Au niveau de l'interface entre les réseaux 12 et 14 est installé un équipement 21 de contrôle des boîtiers femto 10.1-10.N qui correspond au module RNC (« Radio Network Controller ») pour les stations de base de type standard.

Un serveur 23 de configuration comporte les identifiants IDBi des différents boîtiers femto 10.1-10.N du réseau, comme par exemple les numéros d'identification de cellules (« CI »), les identifiants IDTi du ou des terminaux 16 auxquels les boîtiers 10.1-10.N sont associés, ainsi que les paramètres Ki de configurations des différents boîtiers 10.1-10.N du réseau. Les identifiants IDTi des terminaux comportent au moins un parmi : le numéro IMSI, le numéro IMEI, le numéro de téléphone (MSISDN) de l'utilisateur du boîtier femto, souscripteur du service femto auprès de l'opérateur. Les paramètres Ki de configuration des boîtiers femto 10.1-10.N sont formés notamment par les fréquences, les identifiants, les puissances d'émission, ainsi que la configuration des différents services (voix, data, SMS, « visio », numéros surtaxés, etc.) auxquels l'utilisateur a accès suivant son abonnement.

Par ailleurs, un serveur 24 de localisation identifié sur le réseau par une adresse IP1 est configuré pour répertorier les identifiants IDBi des différents boîtiers femto 10.1-10.N du réseau, les identifiants IDTi du ou des terminaux 16 auxquels chacun des boîtiers 10.1-10.N est associé, ainsi que le positionnement Pi de chaque boîtier femto 10.1-10.N ainsi qu'un champ représentatif de l'état de fraîcheur Fi de l'information de localisation autrement dit indiquant la durée écoulée depuis la dernière mise à jour de la localisation, si la première connexion du terminal 16 au boîtier femto 10.1 auquel il est associé a déjà eu lieu ou non, un changement d'état (allumé ou éteint) du boîtier. Ce serveur 24 est de préférence installé hors du réseau coeur 12 de l'opérateur afin d'autoriser l'accès à des tiers 25 partenaires de l'opérateur. Pour acquérir les données relatives aux identifiants IDBi et IDTi, le serveur 24 établit une connexion avec le serveur 23 de configuration. Toutefois en variante, ce serveur 24 fait partie du réseau coeur 12 ou est confondu avec le serveur 23 de configuration.

Le procédé 100 de géolocalisation selon l'invention comporte une première étape 101 dans laquelle une application 30 logicielle est installée sur le terminal 16 de l'utilisateur. Cette application 30 permet au terminal 16 d'entrer en communication avec le serveur 24 de localisation.

Cette application 30 peut être téléchargée librement par l'utilisateur au moment de la souscription aux services de l'opérateur. Alternativement, l'application 30 est téléchargée sur le terminal 16 par le boîtier femto 10.1 lors la première connexion du terminal 16 au boîtier femto 10.1. Dans ce cas, un message tel qu'un SMS dit « de push » est envoyé à l'utilisateur afin qu'il autorise le téléchargement. Lors de l'installation de l'application 30, l'identifiant IDB1 du boîtier femto 10.1 auquel le terminal 16 est associé est de préférence stocké dans une mémoire M1 du terminal 16.

Dans une étape 102, lorsque le terminal 16 entre en relation radio avec le boîtier femto 10.1, l'application 30 est déclenchée manuellement par l'utilisateur qui active une interface à cet effet, ou l'application 30.

Dans une étape 103, dans le cas d'un déclenchement manuel, une fois l'identifiant IDBi émis par le boîtier 10.1 est capté par le terminal 16, l'application 30 le compare avec l'identifiant IDB1 stocké dans la mémoire M1. Si les identifiants IDBi, IDB1 ne correspondent pas, alors l'application 30 est arrêtée. En revanche, si l'identifiant IDBi capté correspond à l'identifiant IDB1 stocké dans la mémoire M1, alors l'application 30 établit, dans une étape 104, une connexion avec le serveur 24 de localisation. En variante, la vérification de correspondance entre l'identifiant IDBi capté par le terminal 16 et l'identifiant IDT1 du terminal est effectuée directement par le serveur 24 de localisation. Il n'est alors pas nécessaire que le terminal 16 comporte une mémoire M1 pour stocker l'identifiant IDB1.

Alternativement, dans le cas d'une application 30 fonctionnant en arrière-plan du terminal 16, cette dernière s'active automatiquement en détectant l'identifiant IDB1 émis par le boîtier femto et correspondant à l'identifiant stocké dans la mémoire M1. Tant que l'identifiant IDB1 n'est pas détecté par l'application 30, cette application 30 fonctionne en arrière-plan.

Dans une étape 105, l'identité du terminal IDT1 ainsi que l'identité IDB1 du boîtier femto 10.1 sont alors transmises au serveur 24 par le terminal 16. Ce serveur 24 vérifie alors si une mise à jour de la localisation du boîtier femto 10.1 est requise ou non en utilisant notamment l'information Fi. Une mise à jour est requise par le serveur 24 de localisation notamment dans au moins un des cas suivants :
- il s'agit d'une première connexion du terminal 16 au boîtier femto 10.1 auquel il est associé, ou
- un délai prédéterminé depuis la dernière mise à jour de la localisation du boîtier 10.1 a expiré, le délai entre deux mises à jour pouvant être adapté en fonction du besoin des services accédant au serveur 24 de localisation. Ce délai permet de s'assurer que la géolocalisation réalisée par le terminal est assez proche de l'emplacement de la femto cellule,
- le boîtier femto 10.1 a été éteint puis rallumé.

Si aucune mise à jour n'est requise par le serveur 24, l'application 30 est arrêtée ou se remet à fonctionner en arrière-plan. Sinon dans une étape 106, l'application 30 demande à l'utilisateur d'effectuer une mesure de position à l'aide du terminal 16 par l'intermédiaire d'un message 29 visuel et/ou sonore. A cet effet, l'application 30 déclenche un décompteur 31 de temps ou « timer » de valeur paramétrable et notifie l'utilisateur par l'intermédiaire d'un message 32 qu'une acquisition de position doit être effectuée dans le délai imparti par le timer 31. On note que la durée du timer 31 est telle qu'elle évite à l'utilisateur de pouvoir s'éloigner à une trop grande distance du boîtier femto 10.1 tout en lui laissant suffisamment de temps pour qu'il puisse trouver une zone où un signal de positionnement est recevable. Dans un exemple, cette durée est comprise entre 3 et 10 minutes et vaut de préférence 5 minutes.

Dans une étape 107, l'application 30 active alors de préférence une fonctionnalité 34 de type GPS du téléphone ; tandis que l'utilisateur se place dans un endroit où le terminal 16 capte un signal GPS de sorte qu'il est possible d'acquérir la position P1 du terminal. Si l'acquisition GPS est impossible parce que le terminal 16 ne comporte pas de fonctionnalité GPS 34, alors le terminal 16 effectue une estimation de la position par mesure des champs radio émis par les cellules environnantes (non représentées). Bien entendu, tout autre type de géolocalisation supporté par le terminal peut être aussi utilisé.

Plus précisément, le terminal 16 identifie les différentes cellules émettant dans la zone où il se trouve et le cas échéant leur niveau de champ associé. La localisation de ces cellules est ensuite effectuée par l'application 30 à l'aide d'une base de données stockée dans le réseau coeur 12 assurant la correspondance entre l'identifiant d'une cellule et sa localisation. Par une méthode de triangulation, l'application 30 détermine la position du boîtier femto 10.1, ou plus précisément une zone Z1 dans laquelle le boîtier femto 10.1 est susceptible de se trouver. La méthode de triangulation peut également faire appel à une base de données qui contient des cartes de niveaux de champs de chaque cellule en tout point de l'espace obtenues à partir de simulations informatiques.

En variante, le calcul de la position du boîtier femto 10.1 est effectué par le boîtier femto 10.1 ou le serveur 24 de localisation, le terminal 16 transmettant alors les différents paramètres radio mesurés à l'un ou l'autre de ces éléments suivant le cas.

Dans une étape 108, une fois la localisation effectuée, l'application 30 enregistre les coordonnées (X1, Y1) de la position P1 ou de la zone Z1 dans la mémoire M1 et le timer 31 est arrêté et remis à zéro. On note que si la durée du timer 31 avait expiré avant qu'une mesure de position du terminal 16 ait pu être effectuée alors une indication d'absence de mesure du type « NO LOC » par exemple est enregistrée dans la mémoire M1.

Dans une étape 109, les identifiants IDB1 et IDT1 du boîtier 10.1 et du terminal IDT1 ainsi que la position P1 ou Z1 stockée en mémoire M1 sont transmis au serveur 24 de localisation via l'application 30 qui met à jour la donnée P1 et F1 pour le boîtier femto IDB1. Cette transmission est effectuée sous la couverture radio du boîtier femto 10.1 dans le cas où cette couverture existe et/ou sous la couverture dite « macro » de la ou des cellules des stations de base 33 avec lesquelles le terminal 16 a établi une communication suite au déplacement de l'utilisateur. Dans le cas d'absence de mesure, une position par défaut « NO LOC » est remontée au serveur 24.

Dans le cas où aucune mesure de position n'a pu être effectuée par l'application 30 (transmission du message « NO LOC »), le boîtier femto 10.1 pourra être inhibé ou ses fonctionnalités pourront être restreintes par l'opérateur en modifiant les paramètres P1 et F1 du boîtier 10.1.

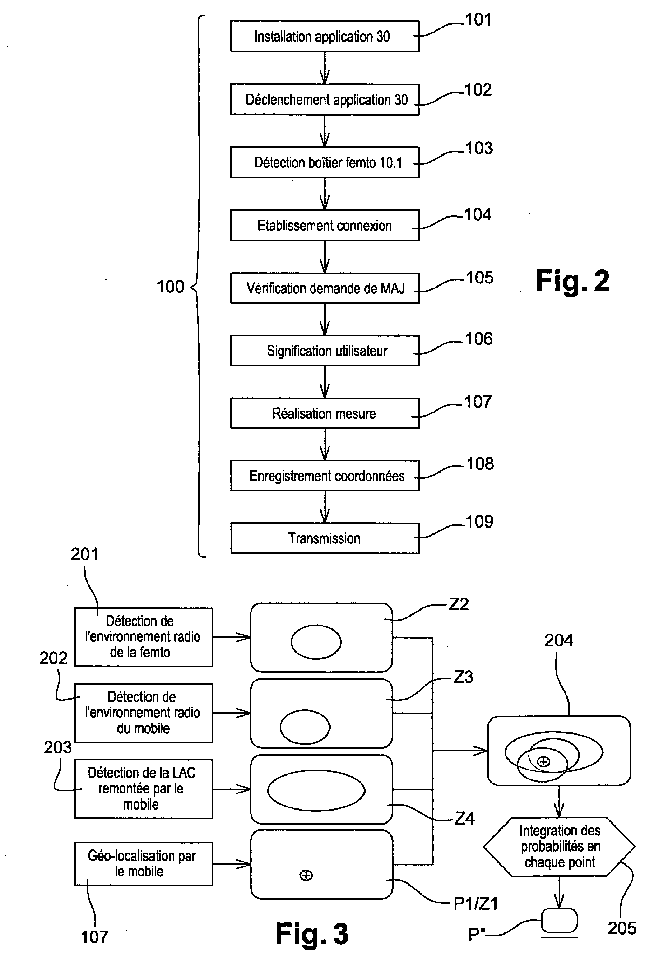

De préférence, mais de manière non obligatoire, l'invention met en oeuvre des mécanismes complémentaires ou substituables à l'étape 107 de mesure de position. Ainsi, comme montré sur la Figure 3, dans le cas où le boîtier femto 10.1 est équipé d'un récepteur radio 35 (« sniffer » en anglais), on met en oeuvre une étape 201 d'estimation de la position P2 du boîtier femto 10.1 par détection de l'environnement radio par le récepteur 35. Cette étape 201 est très semblable à l'étape de mesure de position mise en oeuvre par le terminal 16 lorsque ce dernier ne comporte pas de fonctionnalité GPS. En effet, dans ce cas, le boîtier femto 10.1 scanne les différentes fréquences environnantes, détermine les champs radio et identifie les différentes cellules correspondantes à ces champs. La base de données permet ensuite de déterminer la position de ces cellules et, par une méthode de triangulation, le boîtier femto 10.1 détermine la position P2 du boîtier femto 10.1, où plus précisément une zone Z2 dans laquelle le boîtier femto 10.1 est susceptible de se trouver. La méthode de triangulation peut comme précédemment faire appel à une base de données contenant les cartes de niveaux de champs.

En outre, une étape 202 d'estimation d'une zone Z3 de positionnement du terminal 16 peut être effectuée par détection de l'environnement radio par le terminal 16. Dans ce cas, les informations relatives aux mesures de champs effectuées par le terminal 16 sont envoyées vers le boîtier femto 10.1 pour que ce dernier puisse effectuer le calcul de triangulation décrit précédemment afin de déterminer une zone Z3 de positionnement. Cette étape 110 est mise en oeuvre dans le cas où le boîtier femto 10.1 ne comporte pas de récepteur radio 35 ou en complément de celle-ci lorsque que le boîtier femto 10.1 est installé dans un endroit sans couverture radio, ou pour obtenir plus d'informations sur l'environnement radio dans lequel se trouve le boîtier femto 10.1.

Par ailleurs, dans une étape 203, il est possible de déterminer une localisation générale Z4 du boîtier femto 10.1 à partir d'une donnée relative au positionnement du terminal 16 émise par le terminal 16. Plus précisément, lorsque le terminal 16 entre en communication avec le boîtier femto 10.1, le terminal 16 émet un message 37 de type LU (Location Update) dans le but de mettre à jour sa position. Ce message 37 comporte une identifiant global 37.1 qui définit une LAC (Zone de localisation) dans laquelle il se trouve ou dans laquelle il se trouvait avant de perdre le champ radio du réseau. Une base de données 38 située dans le réseau coeur 12 permet alors d'établir la correspondance entre la zone de localisation LAC remontée par le terminal 16 et la surface géographique Z4 correspondante. Cette étape 203 peut se substituer à l'étape 201 de détection de l'environnement radio par le boîtier femto 10.1 si ce dernier ne comporte pas de récepteur radio 35. Cette étape 203 peut être complémentaire dans le cas où le boîtier 10.1 et le terminal 16 ne reçoivent aucun signal radio.

Ces différentes étapes de mesure permettent de déterminer chacune une certaine zone géographique où le boîtier femto 10.1 est susceptible de se trouver. Chaque zone P1 ou Z1, Z2, Z3 et Z4 est donc définie comme un ensemble d'emplacements possibles du boîtier femto 10.1, chacune ayant une certain probabilité X1, X2, X3 et X4. Dans une étape 204, on effectue une intersection des différentes zones P1 ou Z1, Z2, Z3 et Z4 puis dans une étape 205, on réalise une intégration des probabilités X1, X2, X3 et X4 permettant de déterminer la position géographique P" la plus vraisemblable du boîtier femto 10.1. Cette position P" est ensuite transmise au serveur 24 via l'application 30. On note néanmoins que l'étape 107 de géolocalisation par le terminal 16 en cas d'utilisation de la fonctionnalité GPS permet d'obtenir les résultats les plus précis.

La mise en oeuvre de l'invention n'est pas limitée à la localisation d'un boîtier femto 10.1. En effet, l'invention pourrait être mise en oeuvre avec tout type d'équipement apte à établir une liaison avec un réseau informatique et/ou avec un terminal mobile. Dans certains cas bien sûr, si l'équipement ne dispose pas des fonctionnalités pour le faire, certains mécanismes de détection de l'environnement radio ne seront pas mis en oeuvre par l'équipement. Un exemple, serait par exemple de faire avantageusement localiser des imprimantes par l'intermédiaire des mobiles et ceci pour permettre une maintenance plus rapide de ces imprimantes.

## Revendications

1. Procédé de contrôle à distance d'un boîtier femto (10.1) parmi une pluralité de boîtiers femto (10.1-10.N) connectés à un réseau coeur (12) d'un opérateur de téléphonie mobile, ce boîtier femto (10.1) étant apte à établir une liaison radio avec un terminal mobile (16) auquel il est associé,
le procédé étant **caractérisé en ce que**, un serveur (24) de localisation étant configuré pour répertorier l'identité (IDBi) et la localisation (Pi) des différents équipements, le procédé comporte les étapes suivantes :
- installer (101) une application logicielle (30) sur le terminal mobile (16) permettant audit terminal mobile (16) de communiquer avec le serveur (24) de localisation,
- lors de l'installation de l'application logicielle stocker par le terminal mobile, dans une mémoire (M1) du terminal mobile (16), un identifiant (IDB1) du boîtier femto (10.1) auquel le terminal mobile (16) est associé,
- capter, par le terminal mobile, un identifiant d'un boîtier fernto à proximité duquel le terminal mobile est positionné et si l'identifiant capté correspond à l'identifiant stocké dans la mémoire du terminal mobile (16), alors
- établir (103) une connexion entre le terminal mobile (16) et le serveur (24) de localisation au moyen de l'application logicielle (30),
- demander à l'utilisateur du terminal mobile d'effectuer une mesure de position du boîtier femto (10.1) dans un délai imparti dans au moins un des cas suivants: (i) il s'agit d'une première connexion du terminal mobile (16) au boîtier femto auquel il est associé, (ii) un délai prédéterminé depuis une dernière mise à jour de localisation du boîtier femto (10.1) a expiré, (iii) le boîtier femto a été éteint puis rallumé, l'application logicielle (30) déclenchant un décompteur de temps (31) et notifiant l'utilisateur par l'intermédiaire d'un message qu'une acquisition de position doit être effectuée dans le délai imparti par le décompteur de temps (31),
- si l'utilisateur donne suite à cette demande alors, ledit procédé comporte une étape de mesure (106), au moyen du terminal mobile (16), de la position (P1, Z1) dudit terminal mobile (16), cette position (P1, Z1) étant considérée comme étant une localisation proche de celle du boîtier femto' (10.1), et une étape de transmission (109) de la mesure de position (P1, Z1) au serveur (24) de localisation de manière à renseigner sur la localisation de ce boîtier femto (10.1) et
- dans le cas où aucune mesure de position n'a pu être effectuée alors ledit, procédé comporte une étape dans laquelle le boîtier femto boîtier femto (10.1) est inhibé, ou bien ses fonctionnalités sont restreintes par l'opérateur.

2. Procédé selon la revendication 1, dans lequel l'étape d'installer (101) l'application logicielle (30) est effectuée de manière manuelle par l'utilisateur ou est effectuée automatiquement par le boîtier femto (10.1) lors d'une première connexion du terminal mobile (16) avec le serveur (24) de localisation, notamment à l'occasion de la mise en service du boîtier femto dont on veut déterminer la localisation ou à l'occasion de sa mise ou remise sous tension.

3. Procédé selon la revendication 1 ou 2, comportant une étape de détection que le terminal mobile (16) est en relation avec le boîtier femto (10.1) auquel il est associé, un identifiant (IDB1) du boîtier femto (10.1) auquel est associé le terminal mobile (16) étant stocké dans une mémoire (M1) du terminal mobile (16) lors de l'installation de l'application logicielle (30), pour détecter que le terminal mobile (16) est en relation avec le boîtier femto (10.1) auquel il est associé, ledit procédé comporte une étape de comparaison de l'identifiant (IDB1) stocké dans la mémoire (M1) du terminal mobile avec un identifiant (IDBi) émis par le boîtier femto (10.1) capté par le terminal mobile (16).

4. Procédé selon l'une des revendications 1 à 3, comportant, simultanément à l'étape de mesure de position (106), les étapes suivantes :
- activation du décompteur de temps (31) paramétré pour une durée comprise entre 3 et 10 minutes valant de préférence 5 minutes, et
- signification à l'utilisateur que la mesure de position doit être effectuée dans la durée impartie par le décompteur de temps (31).

5. Procédé selon l'une des revendications 1 à 4, dans lequel, avant d'effectuer l'étape de mesure de position (106), l'application logicielle (30) vérifie qu'une mise à jour de la localisation est requise par le serveur (24) de localisation.

6. Procédé selon la revendication 5, dans lequel la localisation du boîtier femto est requise par le serveur (24) de localisation notamment dans au moins un des cas suivants :
- une première connexion est établie entre le terminal mobile (16) et le boîtier femto (10.1) auquel il est associé, ou
- un délai prédéterminé depuis la dernière mise à jour de la localisation du boîtier femto (10.1) a expiré, ou
- le boîtier femto (10_{.}1) a été éteint puis rallumé.

7. Procédé selon l'une des revendications 1 à 6, dans lequel, pour effectuer l'étape de mesure (106) de la position du terminal mobile (16), l'application logicielle (30) active une fonctionnalité GPS du terminal mobile (16) et/ou analyse des mesures de champs émis par des cellules radio environnantes effectuées par le terminal mobile (16).

8. Procédé selon l'une des revendications 1 à 7, dans lequel l'étape de transmission (109) de la mesure de position (P1) est effectuée via le boîtier femto (10.1) et/ou via une station de base avec laquelle le terminal mobile (16) a établi une communication.

9. Procédé selon la revendication 3, dans lequel l'identifiant est l'identifiant « Cell Id » spécifique des boîtiers femto ou l'ensemble des zones « LAC » spécifiques des boîtiers femto.

10. Procédé selon la revendication 9, comportant en outre les étapes suivantes :
- dans le cas où le boîtier femto (10.1) est équipé d'un récepteur radio (35) du boîtier femto, estimer (201) une zone (Z2) de localisation du boîtier femto (10.1) par détection de l'environnement radio par le récepteur radio (35) du boîtier femto,
- estimer (202) une zone (Z3) de localisation du terminal mobile (16) par détection de l'environnement radio par le terminal mobile (16),
- estimer (203) une zone (Z4) de localisation du boîtier femto (10.1) à partir d'un code LAC émis par le terminal mobile (16) lorsque le terminal mobile (16) entre en communication avec le boîtier femto (10.1),
- intégrer des probabilités associées à ces différentes zones de localisation (P1, Z2, Z3, Z4) pour en déduire la position (P") du boîtier femto.

11. Système de contrôle à distance d'un boîtier femto (10.1) parmi une pluralité de boîtiers femto (10.1-10.N) connectés à un réseau coeur (12) d'un opérateur de téléphonie mobile, ledit système comportant une pluralité de boîtiers femto (10.1-10.N) connectés audit réseau coeur (12), un serveur (24) de localisation et des moyens permettant de mettre en oeuvre les étapes du procédé selon l'une des revendications 1 à 10.

## Patentansprüche

1. Verfahren zur Fernkontrolle einer Femtozelle (10.1) unter einer Vielzahl von Femtozellen (10.1-10.N), die mit einem Kernnetz (12) eines Mobiltelefonnetzbetreibers verbunden sind, wobei diese Femtozelle (10.1) in der Lage ist, eine Funkverbindung mit einem Mobilterminal (16) aufzubauen, dem sie zugeordnet ist,
wobei das Verfahren **dadurch gekennzeichnet ist, dass** ein Ortungsserver (24) konfiguriert wird, um die Identität (IDBi) und die Ortung (Pi) der verschiedenen Geräte zu verzeichnen, und das Verfahren die folgenden Schritte umfasst:
- die Installation (101) einer Softwareapplikation (30) im Mobilterminal (16), mit deren Hilfe das besagte Mobilterminal (16) in der Lage ist, mit dem Ortungsserver (24) zu kommunizieren,
- bei der Installation der Softwareapplikation die Ablage durch das Mobilterminal eines Benutzernamens (IDB1) der Femtozelle (10.1), dem das Mobilterminal (16) zugeordnet ist, in einem Speicher (M1) des Mobilterminals (16),
- der Empfang eines Benutzernamens der Femtozelle durch das Mobilterminal in dessen Nähe sich das Mobilterminal befindet, und wenn der empfangene Benutzername dem abgelegten Benutzernamen entspricht, der im Speicher des Mobilterminals (16) abgelegt ist, dann
- der Aufbau (103) einer Verbindung zwischen dem Mobilterminal (16) und dem Ortungsserver (24) mithilfe der Softwareapplikation (30),
- den Befehl an den Benutzer des Mobilterminals, in zumindest einem der folgenden Fälle eine Messung der Position der Femtozelle (10.1) innerhalb einer festgesetzten Frist durchzuführen: (i) es handelt sich um eine erste Verbindung des Mobilterminals (16) mit der Femtozelle, der sie zugeordnet ist, (ii) eine vorbestimmte Frist seit einer zuletzt erfolgten Aktualisierung der Ortung der Femtozelle (10.1) ist abgelaufen, (iii) die Femtozelle wurde ausgeschaltet und wieder eingeschaltet, wobei die Softwareapplikation (30) einen Zeitrückzähler (31) auslöst und dem Benutzer anhand einer Meldung anzeigt, dass vom Zeitrückzähler (31) innerhalb einer festgesetzten Frist eine Positionserfassung durchzuführen ist,
- falls der Benutzer diesen Befehl ausführt, umfasst das besagte Verfahren einen Schritt zum Messen (106) der Position (P1, Z1) des besagten Mobilterminals (16), der vom Mobilterminal (16) ausgeführt wird, wobei diese Position (P1, Z1) als eine Ortung angesehen wird, die nahe jener der Femtozelle (10.1) liegt, und einen Schritt zum Übertragen (109) des Positionsmesswerts (P1, Z1) zum Ortungsserver (24), um ihn über die Ortung dieser Femtozelle (10.1) zu informieren, und
- für den Fall, dass keine Positionsmessung durchgeführt werden konnte, das Verfahren einen Schritt umfasst, in dem die Femtozelle (10.1) unterdrückt wird, oder ihre Funktionen vom Netzbetreiber eingeschränkt werden.

2. Verfahren nach Anspruch 1, bei dem der Schritt der Installation (101) der Softwareapplikation (30) von Hand vom Benutzer durchgeführt wird, oder bei einer ersten Verbindung des Mobilterminals (16) mit dem Ortungsserver (24) automatisch durch die Femtozelle (10.1) erfolgt, vor allem aus Anlass der Inbetriebnahme der Femtozelle, die man orten möchte, oder wenn sie erneut eingeschaltet wird.

3. Verfahren nach Anspruch 1 oder 2, das einen Schritt zur Erfassung enthält, ob das Mobilterminal (16) in Verbindung mit der Femtozelle (10.1) steht, der es zugeordnet ist, wobei ein Benutzername (IDB1) der Femtozelle (10.1), der das Mobilterminal (16) zugeordnet ist, bei der Installation der Softwareapplikation (30) in einem Speicher (M1) des Mobilterminals (16) abgelegt wird, um zu erfassen, ob das Mobilterminal (16) mit der Femtozelle (10.1), der es zugeordnet ist, in Verbindung steht, und das besagte Verfahren einen Schritt zum Vergleichen des im Speicher (M1) des Mobilterminals abgelegten Benutzernamens (IDB1) mit einem Benutzernamen (IDBi) enthält, der von der Femtozelle (10.1) ausgegeben und vom Mobilterminal (16) empfangen wird.

4. Verfahren nach einem der Ansprüche 1 bis 3, das gleichzeitig mit dem Schritt der Positionsmessung (106) auch die folgenden Schritte umfasst:
- die Aktivierung des Zeitrückzählers (31), der für eine Dauer zwischen 3 und 10 Minuten, vorzugsweise jedoch für 5 Minuten parametriert ist, und
- den Hinweis an den Benutzer, dass die Positionsmessung vom Zeitrückzähler (31) innerhalb einer festgesetzten Frist durchzuführen ist.

5. Verfahren nach einem der Ansprüche 1 bis 4, bei dem die Softwareapplikation (30) vor dem Schritt der Positionsmessung (106) überprüft, ob vom Ortungsserver (24) eine Aktualisierung der Ortung benötigt wird.

6. Verfahren nach Anspruch 5, bei dem die Ortung der Femtozelle vom Ortungsserver (24) in zumindest einem der folgenden Fälle benötigt wird:
- eine erste Verbindung wird zwischen dem Mobilterminal (16) und der Femtozelle (10.1), der es zugeordnet ist, wird erstellt, oder
- eine vorbestimmte Frist seit der letzten Aktualisierung der Ortung der Femtozelle (10.1) ist abgelaufen, oder
- die Femtozelle (10.1) wurde ausgeschaltet und wieder eingeschaltet.

7. Verfahren nach einem der Ansprüche 1 bis 6, bei dem die Softwareapplikation (30) zur Durchführung des Schrittes der Messung (106) der Position des Mobilterminals (16) eine GPS Funktion des Mobilterminals (16) aktiviert und/ oder die Feldmessungen durch das Mobilterminal (16) analysiert, die von den umliegenden Funkzellen ausgesandt werden.

8. Verfahren nach einem der Ansprüche 1 bis 7, bei dem der Schritt der Übertragung (109) der Positionsmessung (P1) über die Femtozelle (10.1) und/ oder über eine Basisstation erfolgt, mit der das Mobilterminal (16) eine Kommunikation aufgebaut hat.

9. Verfahren nach Anspruch 3, bei dem der Benutzername der spezielle "Cell Id" Benutzername der Femtozellen (10.1) oder aller spezieller "LAC" Bereiche der Femtozellen ist.

10. Verfahren nach Anspruch 9, das darüber hinaus die folgenden Schritte umfasst:
- für den Fall, dass die Femtozelle (10.1) mit einem Funkempfänger (35) der Femtozelle ausgestattet ist, die Einschätzung (201) einer Ortungszone (Z2) der Femtozelle (10.1) durch die Erfassung der Funkumgebung durch den Funkempfänger (35) der Femtozelle,
- die Einschätzung (202) einer Ortungszone (Z3) des Mobilterminals (16) durch die Erfassung der Funkumgebung durch das Mobilterminal (16),
- die Einschätzung (203) einer Ortungszone (Z4) der Femtozelle (10.1) ausgehend von einem LAC Code, der vom Mobilterminal (16) ausgesandt wird, wenn das Mobilterminal (16) mit der Femtozelle (10.1) kommuniziert,
- die Einbeziehung der Wahrscheinlichkeiten, die diesen verschiedenen Ortungszonen (P1, Z2, Z3, Z4) zugeordnet sind, um davon die Position (P") der Femtozelle abzuleiten.

11. System zur Fernkontrolle einer Femtozelle (10.1) unter einer Vielzahl von Femtozellen (10.1-10.N), die mit einem Kernnetz (12) eines Mobiltelefonnetzbetreibers verbunden sind, wobei das besagte System eine Vielzahl von Femtozellen (10.1-10.N) enthält, die mit dem besagten Kernnetz (12) verbunden sind, und es anhand eines Ortungsservers (24) und Geräten möglich ist, die Schritte des Verfahrens nach einem der Ansprüche 1 bis 10 umzusetzen.

## Claims

1. A method for remotely controlling a femtocell (10.1) from a plurality of femtocells (10.1 - 10.N) connected to a mobile operator's core network (12), this femtocell (10.1) being capable of establishing a radio connection with a mobile terminal (16) to which it is associated,
the method being **characterised in that**, with a location server (24) being configured to list the identity (IDBi) and location (Pi) of the different equipment, the method comprises the following steps:
- installing (101) a software application (30) on the mobile terminal (16), enabling said mobile terminal (16) to communicate with the location server (24),
- during the installation of the software application, storing, by the mobile terminal in a memory (M1) of the mobile terminal (16), an identifier (IDB1) of the femtocell (10.1) to which the mobile terminal (16) is associated,
- capturing, by the mobile terminal, an identifier of a femtocell near to which the mobile terminal is located, and if the identifier captured corresponds to the identifier stored in the memory of the mobile terminal (16),
- establishing (103) a connection between the mobile terminal (16) and the location server (24) via the software application (30),
- requesting that the mobile terminal user measures the position of the femtocell (10.1) within a given period of time in at least one of the following cases: (i) this concerns the mobile terminal's (16) first connection to the femtocell to which it is associated, (ii) a predetermined period of time has elapsed since the location of the femtocell (10.1) was last updated, (iii) the femtocell has been turned off and rebooted, with the software application (30) activating a count-down timer (31) and notifying the user by a message, that a position measurement must be performed within the period of time set by the count-down timer (31),
- if the user responds to this request, said method comprises a step (106) for measuring, by means of the mobile terminal (16), the position (P1, Z1) of said mobile terminal (16), this position (P1, Z1) being considered as being a location near to that of the femtocell' (10.1), and a step (109) for transmitting the position measurement (P1, Z1) to the location server (24) so as to provide information regarding the location of this femtocell (10.1) and
- in the event that no position measurement could be made, said method comprises a step wherein the femtocell (10.1) is inhibited or its functions are restricted by the operator.

2. A method according to claim 1, wherein the step (101) for installing the software application (30) is performed manually by the user or is performed automatically by the femtocell (10.1) during the first connection of the mobile terminal (16) to the location server (24), in particular during the commissioning of the femtocell whose location is to be determined or during its boot or reboot.

3. A method according to claim 1 or 2, comprising a step for detecting whether the mobile terminal (16) is connected to the femtocell (10.1) to which it is associated, where an identifier (IDB1) of the femtocell (10.1) to which the mobile terminal (16) is associated, is stored in a memory (M1) of the mobile terminal (16) during the installation of the software application (30), to detect whether the mobile terminal (16) is connected to the femtocell (10.1) to which it is associated, said method comprises a step for comparing the identifier (IDB1) stored in the mobile terminal's memory (M1) with an identifier (IDBi) emitted by the femtocell (10.1) captured by the mobile terminal (16).

4. A method according to one of claims 1 to 3, comprising the following steps, taking place simultaneously to the position measurement step (106):
- activation of the count-down timer (31) configured to a time of 3 to 10 minutes, preferably equal to 5 minutes, and
- indication to the user that the position measurement must be performed within the period of time set by the count-down timer (31).

5. A method according to one of claims 1 to 4, wherein, before performing the position measurement step (106), the software application (30) checks whether a location update is required by the location server (24).

6. A method according to claim 5, wherein the location of the femtocell is required by the location server (24), in particular in at least one of the following cases:
- a first connection is established between the mobile terminal (16) and the femtocell (10.1) to which it is associated, or
- a predetermined period of time has elapsed since the location of the femtocell (10.1) was last updated, or
- the femtocell (10.1) has been turned off and rebooted.

7. A method according to one of claims 1 to 6, wherein, in order to perform the step (106) for measuring the position of the mobile terminal (16), the software application (30) activates a GPS function of the mobile terminal (16) and/or analyses the measurements taken by the mobile terminal (16) of fields emitted by nearby radio cells.

8. A method according to one of claims 1 to 7, wherein the step (109) for transmitting the position measurement (P1) is performed via the femtocell (10.1) and/or via a base station with which the mobile terminal (16) has established communication.

9. A method according to claim 3, wherein the identifier is the "Cell ID" identifier specific to femtocells or all "LAC" areas specific to femtocells.

10. A method according to claim 9, also comprising the following steps:
- in the event that the femtocell (10.1) is equipped with a radio receiver (35) of the femtocell, estimating (201) a location area (Z2) of the femtocell (10.1) by the detection of the radio environment by the radio receiver (35) of the femtocell,
- estimating (202) a location area (Z3) of the mobile terminal (16) by the detection of the radio environment by the mobile terminal (16),
- estimating (203) a location area (Z4) of the femtocell (10.1) from an LAC code emitted by the mobile terminal (16) when the mobile terminal (16) enters into communication with the femtocell (10.1),
- integrating probabilities associated with these different location areas (P1, Z2, Z3, Z4) to deduce the position (P") of the femtocell.

11. A system for remotely controlling a femtocell (10.1) from a plurality of femtocells (10.1 - 10.N) connected to a mobile operator's core network (12), said system comprising a plurality of femtocells (10.1 - 10.N) connected to said core network (12), a location server (24) and means for implementing the steps of the method according to one of claims 1 to 10.
